# EUROPEAN PATENT SPECIFICATION

(11) **EP 1 767 412 B1**
(45) Date of publication and mention of the grant of the patent: **20.01.2010**
(21) Application number: 06019791.0
(22) Date of filing: 21.09.2006
(51) Int. Cl.: B60R 21/18, B60R 22/26, B60R 22/20

(54) **Passenger constraining apparatus**
Beifahrer-Rückhaltevorrichtung
Appareil de retenue des passagers

(30) Priority: 26.09.2005 JP 2005278164; 26.09.2005 JP 2005278172; 27.02.2006 JP 2006050537
(43) Date of publication of application: 28.03.2007
(73) Proprietor: TAKATA CORPORATION, Minato-ku, Tokyo 106-8510 (JP)
(72) Inventor: Suyama, Yoji, Minato-ku Tokyo 106-8510 (JP); Kokeguchi, Akira, Minato-ku Tokyo 106-8510 (JP)
(74) Representative: Banzer, Hans-Jörg

(56) References cited:
- EP-A- 0 573 741
- DE-A1- 19 950 951
- JP-A- 2001 239 906
- US-A- 6 145 881

## Description

The present invention relates to a passenger constraining apparatus for constraining a passenger seated on a vehicle seat with an inflatable belt.

### Background Art

As a passenger constraining apparatus for constraining a passenger seated on a vehicle seat with an inflatable belt, a passenger constraining apparatus having a shoulder anchor arranged on a rear side of the seat with respect to the vehicle, and a passenger constraining belt to be passed through the shoulder anchor and pulled around a front side of the passenger, in which at least a portion of the passenger constraining belt which is arranged on a lateral side of the passenger's head is an inflatable portion is known (for example, Japanese Unexamined Patent Application Publication No. 2003-312439).

The passenger constraining apparatus (air belt apparatus) in Japanese Unexamined Patent Application Publication No. 2003-312439 described above includes a shoulder anchor mounted to an upper portion of a pillar member placed on the obliquely rear side of the vehicle seat, so that a passenger constraining belt passed through the shoulder anchor is pulled around the front side of the passenger seated on the seat.

The passenger constraining belt includes a shoulder belt section which is drawn obliquely from the shoulder anchor via the lateral side of the passenger's head and the front side of an upper body of the passenger to a portion near a lumber part on the other side of the shoulder anchor, and a lap belt section which is continued from a lower end of the shoulder belt section and drawn along the lateral direction so as to cover around an abdominal portion of the passenger. In the same publication, the shoulder belt section is configured with an inflatable bag-shaped belt. The bag-shaped belt is arranged so that an upper end side thereof is positioned on the lateral side of the passenger's head. In the same publication, the lap belt section is also configured with the inflatable bag-shaped belt.

When the vehicle collides, falls on its side, or the like, the shoulder belt section and the lap belt section are inflated to constrain the passenger. At this time, the upper end side of the shoulder belt section is inflated on the lateral side of the passenger's head, that is, between the passenger's head and a side surface of a cabin. Accordingly, the passenger's head is prevented from hitting directly onto the side surface of the cabin or the like.

A passenger constraining apparatus according to the preamble of claim 1 is known from JP 2001-239906 A.

### Problems to be Solved by the Invention

The inflatable portion of the above-described shoulder belt section or the like is preferably inflated to a position as high as possible and arranged on the lateral side of the center of gravity of the passenger's head or in the vicinity thereof as well.

In order to do so, it is conceivable that the inflatable portion of a large capacity is employed. However, in this case, a high-output inflator is required.

It is an object of the invention to provide a passenger constraining apparatus in which an inflated inflatable portion can be arranged at a high position of the lateral side of the passenger's head without using a high-output inflator.

### Means for Solving the Problems

According to the invention, this object is achieved by a passenger constraining apparatus defined in claim 1. The dependent claims define preferred and advantageous embodiments of the invention.

A passenger constraining apparatus of the invention is a passenger constraining apparatus including a passenger constraining belt to be pulled around a front side of a passenger through a lateral side of the passenger's head and having an inflatable portion at least at a portion arranged on the lateral side of the passenger's head, characterized in that a push-up device for pushing up the inflatable portion is provided on an upper portion of a seatback.

In the passenger constraining apparatus of the invention, since the push-up device for pushing up the inflatable portion of the passenger constraining belt is provided on the upper portion of the seatback of the seat, the inflated inflatable portion can be placed at a high position on the lateral side of the passenger's head without using a high-output inflator by pushing up the inflatable portion with the push-up device.

The push-up device includes a belt guide provided on an upper surface side of the seatback and raising means for raising the belt guide.

As described above, when the configuration is in such a manner that the belt guide is provided on the upper surface side of the seatback, the passenger constraining belt is passed through the belt guide, and the belt guide is raised by the raising means, thereby pushing up the inflatable portion, the positional displacement of the passenger constraining belt is prevented, and hence the inflatable portion can be placed reliably at a predetermined position.

The raising means raise the belt guide by an inflating pressure of the inflatable portion.

In this case, as described above, by configuring the raising means to raise the belt guide by the inflating pressure of the inflatable portion, simplification of the configuration or reduction of manufacturing cost can be achieved without necessity of providing a power source for the raising means separately.

The push-up device is arranged on the upper surface side of the seatback, and it includes the belt guide in which the inflatable portion is passed through on an upper side thereof, a guiding member extending downward from the belt guide and being supported so as to be capable of rising with respect to the seatback, a rotating member arranged on an upper side of the inflatable portion which is drawn over the belt guide, extending in a direction intersecting with the longitudinal direction of the inflatable portion and being rotatably attached to the belt guide at other end side thereof in the extending direction so that one end side thereof in the extending direction can rotate upward, a lever section projecting from the other end side of the rotating member in a direction of extension of the extending direction and moving downward when the one end side of the rotating member is rotated upward, and an abutment member provided on the upper portion of the seatback so that the lever section which is rotated downward comes into abutment therewith, and in that when the lever section is rotated downward, the lever section comes into abutment with the abutment member and, subsequently, when the lever section is further rotated, the belt guide is pushed upward.

In the mode described previously, the inflatable portion drawn between the belt guide and the rotating member is inflated, the rotating member is pushed upward by the inflating pressure of the inflatable portion and is rotated upward, and hence the lever section is rotated downward correspondingly. The lever section rotated downward comes into abutment with the abutment member. The base is raised by the lever section being further rotated downward in association with the process of inflation of the inflatable portion. Consequently, the inflatable portion is pushed upward by the belt guide and is placed at a high position on the lateral side of the passenger's head.

According to a preferred embodiment of the invention, the passenger constraining apparatus includes downward movement preventing means for preventing the downward movement of the pushed-up belt guide.

As described above, by preventing the downward movement of the raised belt guide, the inflated passenger constraining belt can be maintained at a high position.

The raising means may include urging means for urging the belt guide upward, belt guide locking means for preventing the belt guide from rising against an urging force applied by the urging means, and lock releasing means for releasing the lock of the belt guide locking means to cause the belt guide to start rising.

In the passenger constraining apparatus described previously, when the lock by the belt guide locking means is released, the belt guide is pushed upward by the urging means.

Advantageously, the lock releasing means is configured in such a manner that the passenger constraining belt generates a tensile force by the inflation of the inflatable portion, and the tensile force presses and moves the belt guide downward, thereby moving the belt guide locking means to a lock releasing position.

In the passenger constraining apparatus described above, when the inflatable portion is inflated, a tensile force is generated at the passenger constraining belt by the action of the inflatable portion to be shortened, and this tensile force pushes the belt guide downward once.

When the belt guide is pushed downward in this manner, the belt guide locking means is moved to the lock releasing position. Accordingly, the belt guide is pushed upward by being urged by the urging means.

The passenger constraining apparatus may include an airbag apparatus provided in a vehicle seat, and may be characterized in that the lock releasing means causes an airbag to pull the belt guide locking means to move the same to a lock releasing position when the airbag of the airbag apparatus is inflated.

When the airbag such as the side airbag is inflated, the airbag pulls the belt guide locking means, whereby the belt guide locking means moves to the lock releasing position.

According to a preferred embodiment of the invention, the passenger constraining apparatus includes an airbag apparatus provided in a vehicle seat, and is characterized in that when an inflator in the airbag apparatus is activated to generate gas, the lock releasing means pulls the belt guide locking means by a gas pressure from the inflator to move the same to a lock releasing position.

When the inflator of the side airbag apparatus or the like is activated to generate gas, the belt guide locking means is pulled by the gas pressure, whereby the belt guide locking means is moved to the lock releasing position.

### Brief Description of the Drawings

Fig. 1 is a perspective view of a passenger constraining apparatus according to an embodiment of the invention.
Fig. 2 is a perspective view of a push-up device in the passenger constraining apparatus in Fig. 1.
Fig. 3 is a front view of the push-up device of the passenger constraining apparatus in Fig. 1.
Fig. 4 is a front view of the push-up device showing a state in which the inflatable portion of the passenger constraining apparatus in Fig. 1 is pushed up.
Fig. 5 is a side view of the passenger constraining apparatus in Fig. 1.
Fig. 6 is a front view of the push-up device of the passenger constraining apparatus according to another embodiment of the invention.
Fig. 7 is a perspective view of the passenger constraining apparatus according to still another embodiment of the invention.
Fig. 8 is an operation drawing of the passenger constraining apparatus shown in Fig. 7.
Fig. 9 is a cross-sectional view of the passenger constraining apparatus when an inflatable portion is pushed up in Fig. 7.
Fig. 10 is a perspective view of the passenger constraining apparatus according to a different embodiment of the invention.
Fig. 11 is a perspective view of the passenger constraining apparatus according to another different embodiment of the invention.
Fig. 12 is a general view of a seat provided with the passenger constraining apparatus in Fig. 11.
Fig. 13 is a general view of another seat provided with the passenger constraining apparatus in Fig. 11.
Fig. 14 is a cross-sectional view of the push-up device showing a state before the inflatable portion of the passenger constraining apparatus according to still another embodiment of the invention is pushed up.
Fig. 15 is a cross-sectional view of the push-up device showing a state when the inflatable portion of the passenger constraining apparatus in Fig. 14 is pushed up.

### Best Mode for Carrying Out the Invention

Referring now to the drawings, an embodiment of the present invention will be described below.

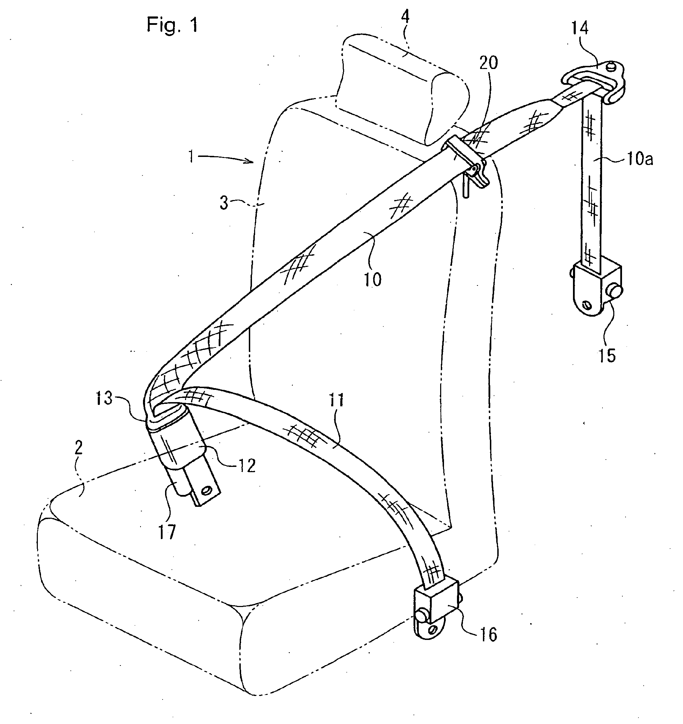

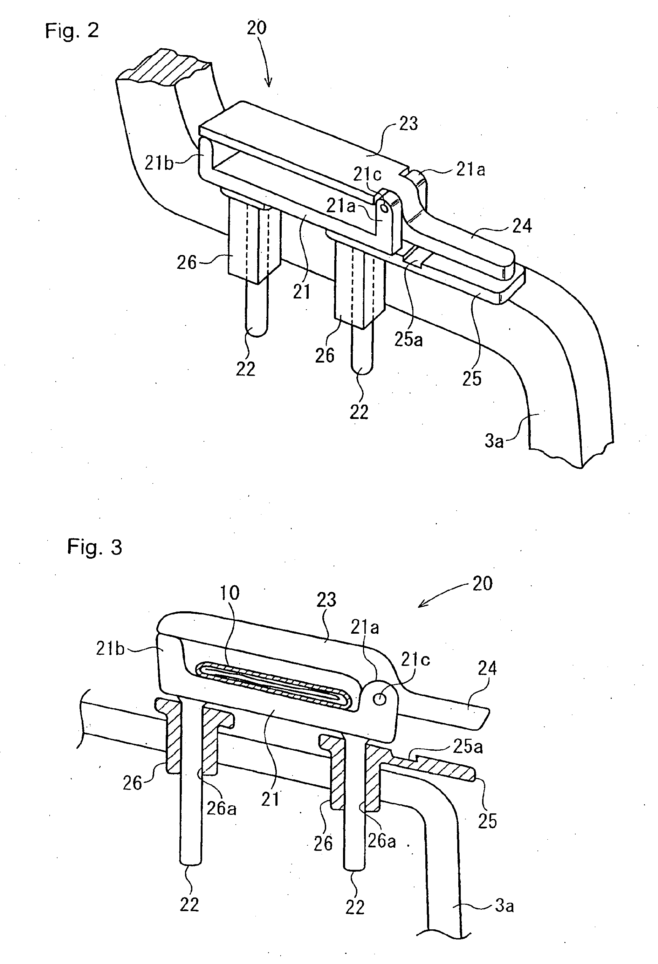

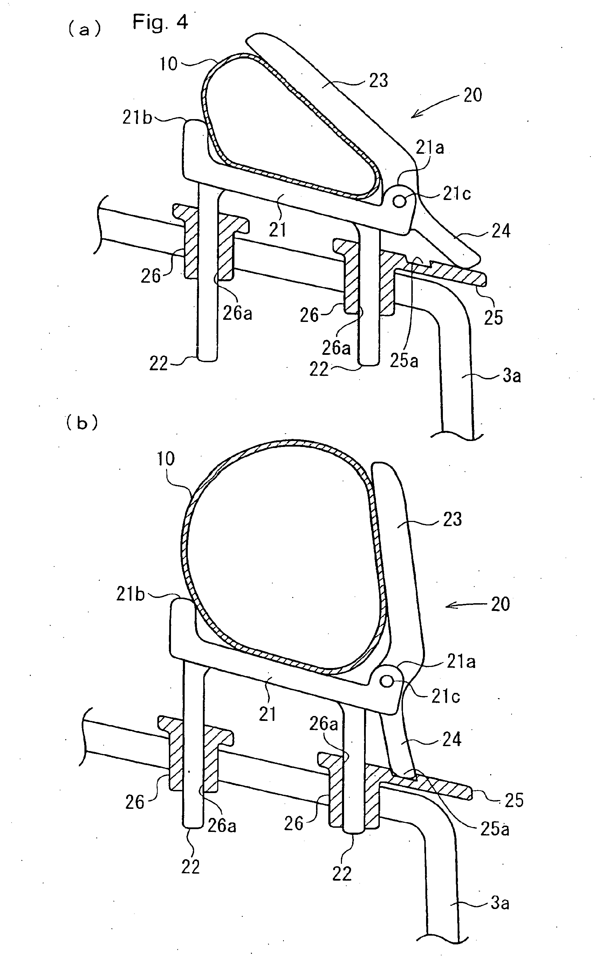

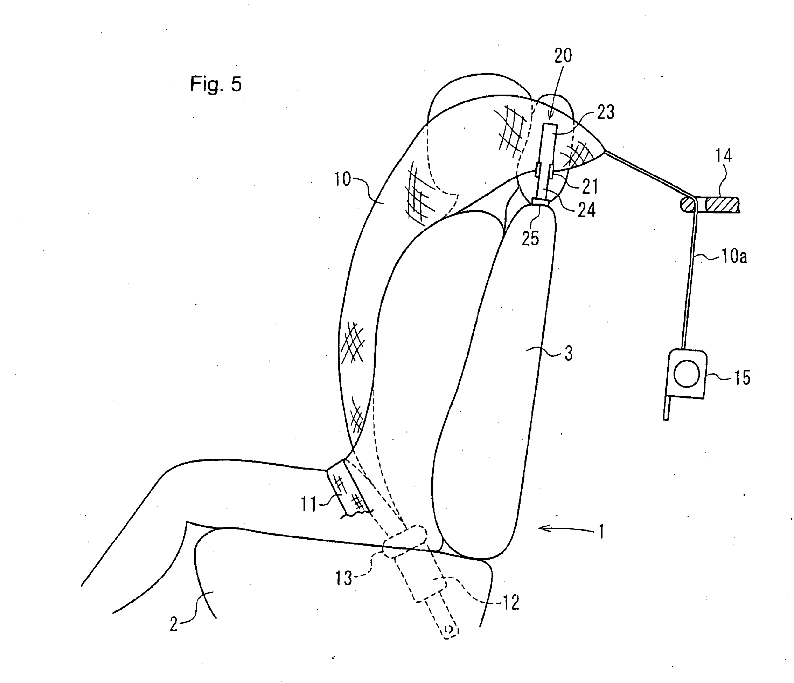

Fig. 1 is a perspective view of a passenger constraining apparatus according to an embodiment of the invention; Fig. 2 is a perspective view of a shoulder belt section push-up device in the passenger constraining apparatus; Fig. 3 is a front view of the push-up device; Figs. 4(a), (b) are front views of the push-up device in course of pushing up the shoulder belt section and at the completion of pushing up the same respectively; and Fig. 5 is a side view of the passenger constraining apparatus. Fig. 5 shows a state in which the shoulder belt section is inflated.

A vehicle seat 1 includes a seat cushion 2 on which a passenger is seated, a seatback 3 which constitutes a back of the seat, and a head rest 4 provided on top of the seatback 3. The seat cushion 2 is formed by mounting a cushion material of urethane or the like on a base frame (not shown) installed on a floor surface of the vehicle. The seatback 3 is formed by mounting the cushion material such as urethane or the like on a seatback frame 3a (Fig. 2 to Fig. 4) extending upright from a rear end of the base frame via a reclining device (not shown).

In this embodiment, the passenger constraining apparatus includes a shoulder belt section 10 as an inflatable portion which passes through a lateral side of the passenger's head seated on the seat 1 and drawn obliquely along a front side of an upper body of the passenger (from the upper left to the lower right in this embodiment), a webbing 10a connected to the shoulder belt section 10, a lap belt section 11 drawn in the lateral direction on an upper side of a lumber part of the passenger, a buckle device 12 installed in adjacent on a lateral side (the right side in this embodiment) of the seat 1, a tongue 13 which is inserted into and engaged with the buckle device 12 when attaching the belt, a shoulder anchor 14 for guiding the webbing 10a, a push-up device 20 for pushing up the shoulder belt section 10 provided on an upper portion of the seatback 3 (the left shoulder portion of the seatback 3 in this embodiment), and so on.

In this embodiment, the shoulder belt section 10, the webbing 10a and the lap belt section 11 constitute a passenger constraining belt, and the shoulder belt section 10 forms the inflatable portion. The shoulder belt section 10 is inflated from the lateral side of the head to the front side of the upper body of the passenger.

The shoulder belt section 10 is formed by folding a wide belt-shaped bag into a narrow band shape and covering the same with a cover, and is held in a band shape in the normal state. A distal end of the webbing 10a is connected to an upper end side of the shoulder belt section 10 by sewing or the like, and the tongue 13 is joined to a lower end side.

The webbing 10a is formed of a normal belt similar to a general non-inflatable seatbelt in the related art, and is slidably guided and passed through the shoulder anchor 14. An end of the webbing 10a is retractably joined to a seatbelt retractor (ELR) 15 with an emergency locking mechanism installed on the vehicle.

In this embodiment, the lap belt section 11 is also formed of a non-inflatable normal belt, and is retractably joined at one end with the tongue 13 and at the other end with a seatbelt retractor (ELR) 16 installed on the seat 1 on the opposite side from the buckle device 12.

In this embodiment, an inflator 17 which is activated in an urgently needed state such as a vehicle collision to generate high-pressure gas is connected to the buckle device 12, and a passage (not shown) for guiding the gas from the inflator 17 into the shoulder belt section 10 is provided on the tongue 13.

The push-up device 20 is arranged on an upper surface side of the left shoulder portion on the seatback 3 in this embodiment, and includes a belt guide 21 on which the shoulder belt section 10 is drawn through, guiding members 22 extending downward from the belt guide 21 and supported on the seatback 3 so as to be capable of rising with respect to the seatback 3, a rotating member 23 arranged on the belt guide 21 on an upper side of the shoulder belt section 10, extending in an intersecting direction with the longitudinal direction of the shoulder belt section 10 and rotatably attached to the belt guide 21 at other side (proximal end side) in the extending direction so that one side in the extending direction (distal end side) can rotate upward, a lever section 24 projecting from the proximal end side of the rotating member 23 in the direction of extension of the extending direction of the rotating member 23 so as to rotate downward when the distal end side of the rotating member 23 rotates upward, and an abutment member 25 that is provided on the upper surface of the left shoulder portion of the seatback 3 and abuts the lever section 24 when it rotates downward.

In this embodiment, the belt guide 21 has a rectangular plate shape extending in the lateral direction along an upper surface of the left shoulder portion of the seatback 3. The belt guide 21 is provided with a pair of holding strips 21a, 21a extending upright for rotatably holding the proximal end side of the rotating member 23 on one end side in the longitudinal direction (the far side from the head rest 4), and a supporting strip 21b extending upright for supporting the distal end side of the rotating member 23 on the other end side (the head rest 4 side). The shoulder belt section 10 is drawn from a rear side to a front side of the seatback 3 so as to pass between the holding strip 21a and the supporting strip 21b.

In this embodiment, the rotating member 23 is arranged on an upper side of the belt guide 21 with the extending direction thereof directed in parallel with the longitudinal direction of the belt guide 21, and an end on the side far from the head rest 4 is rotatably held by the holding strips 21a, 21a via an axis of rotation 21c. As shown in Fig. 2 and Fig. 3, when the shoulder belt section 10 is not inflated, the distal end side of the rotating member 23 rests on the supporting strip 21b, and the belt guide 21 and the rotating member 23 constitute a frame-shaped belt guide which is closed over the entire circumference.

In this embodiment, the lever section 24 extends from the proximal end portion of the rotating member 23 in the direction away from the head rest 4 along the upper surface of the seatback 3 in a state in which the distal end side of the rotating member 23 is moved downward and reaches the supporting strip 21b.

The guiding members 22, having a rod shape (bar shape) in this embodiment, extend downward from a lower surface on one half side and an other half side in the longitudinal direction of the belt guide 21, respectively.

Holding members 26, 26 for holding the respective guiding members 22, 22 so as to be capable of rising are provided on the left shoulder portion of the seatback 3. Each holding member 26 is formed into a substantially cylindrical shape having an inner hole (through hole) 26a, and is secured to the frame 3a passing through the left shoulder portion of the seatback 3 with the axial center line of the inner hole 26a oriented in the vertical direction. An upper end side of the inner hole 26a of each holding member 26 has an opening on the upper surface of the left shoulder portion of the seatback 3. The belt guide 21 is mounted to the seatback 3 so as to be capable of rising by inserting the guiding members 22 into the inner holes 26a of the holding members 26.

The upper end sides of the holding members 26 are slightly projected from the upper surface of the seatback 3, and flanges (reference numerals are omitted) are radially extending from the upper end sides of the respective holding members 26 along the upper surface of the seatback 3.

In this embodiment, the abutment member 25 is formed by extending the flange of the holding member 26 on the side far from the head rest 4 in the direction away from the head rest 4. This abutment member 25 faces the lever section 24 from below.

In this embodiment, a stopper groove 25a is formed on an upper surface of the abutment member 25 for allowing a distal end side of the lever section 24 to engage when the lever section 24 is rotated downward until it abuts on the abutment member 25 and then is further rotated to a posture in which the belt guide 21 is pressed upward to a predetermined height. With the engagement of the distal end side of the lever section 24 with the stopper groove 25a, the lever section 24 is prevented from rotating in the opposite direction, that is, a downward movement of the belt guide 21 is prevented.

In the passenger constraining apparatus in this configuration, the passenger constraining belt is used in the same manner as the normal seatbelt. When the passenger constraining belt is attached, for example, the belt guide 21 of the push-up device 20 and the rotating member 23 function as the belt guide. When the vehicle collides or falls on its side and hence the inflator 17 is activated, gas is introduced into the shoulder belt section 10, and as shown in Figs. 4 and 5, the shoulder belt section 10 is inflated as it increases the thickness (diameter).

In this case, as shown in Figs. 4(a) to (b), the rotating member 23 is pushed up and is rotated upward by an inflating pressure of the shoulder belt section 10 passed between the belt guide 21 and the rotating member 23 and, accordingly, the lever section 24 rotates downward. The lever section 24 rotated downward comes into abutment with the abutment member 25. Then, in association with the process of inflation of the shoulder belt section 10, the lever section 24 is further rotated, and hence the lever section 24 receives a reaction force from the abutment member 25 and raises the belt guide 21.

Consequently, the shoulder belt section 10 is pushed upward by the belt guide 21, and as shown in Fig. 5, the inflated shoulder belt section 10 is placed at a high position on the lateral side of the passenger's head.

Then, when the lever section 24 is rotated downward by a predetermined angle, it is fitted to the stopper groove 25a, and the rotation of the lever section 24 in the opposite direction is prevented. Accordingly, the downward movement of the inflated shoulder belt section 10 is prevented.

In this manner, in this passenger constraining apparatus, since the shoulder belt section 10 is pushed up by the push-up device 20 provided on the upper surface side of the seatback 3, the inflated shoulder belt section 10 can be placed at a high position on the lateral side of the passenger's head without using a high-output inflator.

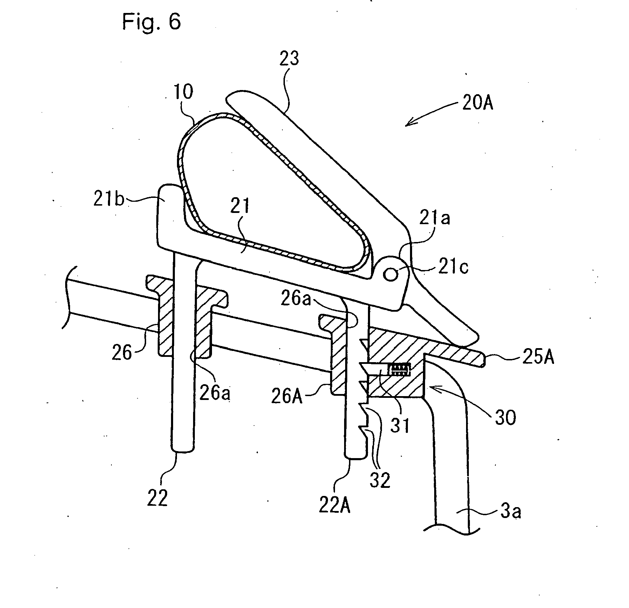

Although the embodiment described above is configured in such a manner that the rotation of the lever section 24 in the opposite direction is prevented by the lever section 24 engaged with the stopper groove 25a on the upper surface of the abutment member 25 when being rotated by a predetermined angle, and hence the inflated shoulder belt section 10 (belt guide 21) is maintained in the raised state, the mechanism to maintain the inflated shoulder belt section 10 in the raised state is not limited thereto. For example, it is also possible to configure in such a manner that the inflated shoulder belt section 10 (belt guide 21) is maintained in the raised state by preventing the guiding members from retracting downward after raising. Fig. 6 is a front view of a push-up device 20A configured in this manner showing a state of pushing up the inflatable portion of the push-up device 20A.

In the push-up device 20A in Fig. 6, a holding member 26A for holding one of the guiding members 22A of the belt guide 21 so as to be capable of rising is provided with a ratchet mechanism 30 for preventing the raised guiding member 22A from retracting downward.

The ratchet mechanism 30 is provided with a claw 31 projecting into the inner hole 26a of the holding member 26A by an urging force of a spring (reference numeral is omitted), and grooves 32 which the claw 31 is engaged with is formed on a side surface of the guiding member 22A. The plurality of grooves 32 are provided on the guiding member 22A at different positions in the extending direction (vertical direction) of the guiding member 22A. The ratchet mechanism 30 is configured to cause the claw 31 to retract from the groove 32 to allow the rising movement of the guiding member 22A when the guiding member 22A rises and allow the rising movement of the guiding member 22A and to cause the claw 31 not to retract from the groove 32 and prevent the downward movement of the guiding member 22A when the guiding member 22A tries to move downward.

In this embodiment, the stopper groove which the lever section 24 engages with is not provided on an upper surface of an abutment member 25A.

Other configurations of the push-up device 20A are the same as the push-up device 20 in Figs. 1 to 5 described above, and the same reference numerals as Figs. 1 to 5 in Fig. 6 designate the same portions.

In this push-up device 20A, when the guiding member 22A is raised, the ratchet mechanism 30 prevents the guiding member 22A from retracting downward. Therefore, the inflated shoulder belt section 10 and the belt guide 21 which rotatably supports the shoulder belt section 10 is maintained in a state of being raised to a high position on the lateral side of the passenger's head.

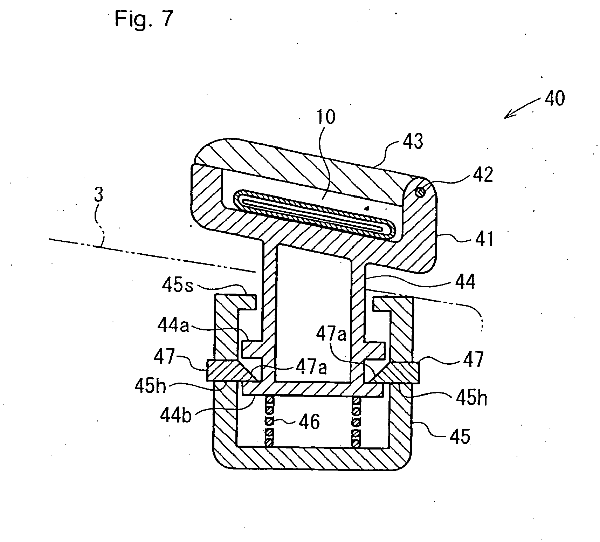

Referring now to Fig. 7 to Fig. 12, another embodiment of the invention will be described.

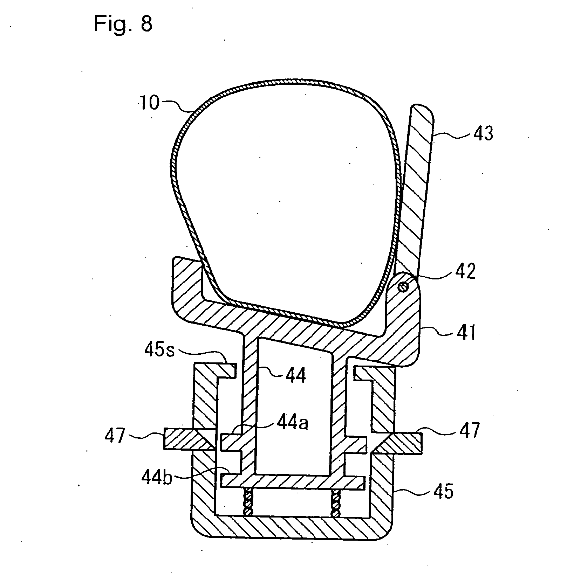

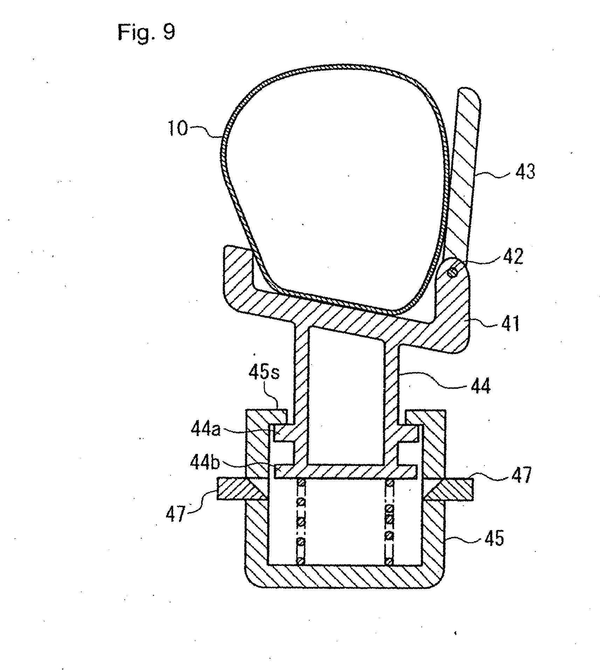

Fig. 7 to Fig. 9 show the push-up device of the passenger constraining apparatus according to the embodiments described in Claims 6 and 7, in which Fig. 7 shows a state in which the belt guide is in a stationary state; Fig. 8 shows a state in which the belt guide is pushed downward; and Fig. 9 shows a state in which the belt guide is pushed upward.

In this embodiment as well, the shoulder belt section 10 as the inflatable portion is formed by folding the wide belt-shaped bag into the narrow band shape and covering the same with the cover, and is held in the band shape in the normal state in the same manner as the above-described embodiment.

As shown in Fig. 7, a push-up device 40 is arranged on the upper surface side of the left shoulder portion of the seatback 3, and includes a belt guide 41 on which the shoulder belt section 10 is drawn through, a top cover 43 rotatably attached to the belt guide 41 via a supporting shaft 42, a guiding member 44 extending downward from the belt guide 41, a holding member 45 for supporting the guiding member 44 so as to be capable of rising, a coil spring 46 serving as urging means for urging the guiding member 44 upward, lock pins 47 serving as locking means for preventing the guiding member 44 from rising, and the like on the upper side thereof.

The belt guide 41 has an upwardly opening angular C-shape, and the top cover 43 is provided on an upper side of the shoulder belt section 10 so as to straddle the belt guide 41. The belt guide 43 is pushed upward and rotates in the upright direction when the shoulder belt section 10 is inflated. It is also possible to urge the top cover 43 in the tilt-down direction by a magnet or a spring.

The guiding member 44 has a bottomed cylindrical shape, and is coaxially inserted into the holding member 45 having the bottomed cylindrical shape with the direction of axial center of the cylinder oriented in the vertical direction from above. The spring 46 is interposed between a bottom surface of the holding member 45 and a bottom surface of the guiding member 44 in a pressure-accumulated state.

A lower flange section 44b and an upper flange section 44a of an outwardly extending flange shape are projected from two points; a lower end portion of the guiding member 44 and a position slightly upward therefrom.

A plurality of supporting holes 45h for the lock pins 47 are provided on a side periphery of the holding member 45 at intervals in the circumferential direction, and the lock pins 47 are inserted into the supporting holes 45h so as to be capable of coming in and out. Distal end sides of the lock pins 47 project from an inner peripheral surface of the holding member 45, and are inserted between the upper flange section 44a and the lower flange section 44b. An upper surface of the distal end side of the lock pin 47 is formed into an inclined surface 47a which is inclined downwardly toward the distal end. An outer peripheral end of the upper flange section 44a is placed above the inclined surface 47a. A lower surface of the lock pin 47 is substantially horizontal.

An inward flange-shaped stopper section 45s is provided on an upper end of the holding member 45.

In the passenger constraining apparatus provided with this push-up device 40, when the shoulder belt section 10 is not inflated and is in the stationary state, the lock pins 47 are inserted between the upper flange section 44a and the lower flange section 44b as shown in Fig. 7, and the lower flange section 44b is locked by the lock pins 47 to prevent the belt guide 41 from rising.

As shown in Fig. 8, when the shoulder belt section 10 starts inflation, the length of the shoulder belt section 10 in the longitudinal direction is reduced in association with the inflation thereof, and a tensile force is generated at the shoulder belt section 10. The belt guide 41 and the guiding member 44 are pushed downward by this tensile force.

The upper flange section 44a abuts against the inclined surface 47a of the lock pin 47 at the time of this downward movement, and the lock pin 47 moves outwardly of the holding member 45, so that the lock pins 47 cannot lock the lower flange section 44b any longer. Subsequently, the guiding member 44 and the belt guide 41 rise by an urging force of the spring 46. In this case, since the lock pins 47 are retracted, the lower flange section 44b does not come into abutment with the lock pins 47, and the belt guide 41 is pushed upward until the upper flange section 44a comes into abutment with the stopper section 45s as shown in Fig. 9, and is maintained in this state. Accordingly, the inflated shoulder belt section 10 is maintained at a high position on the lateral side of the passenger's head.

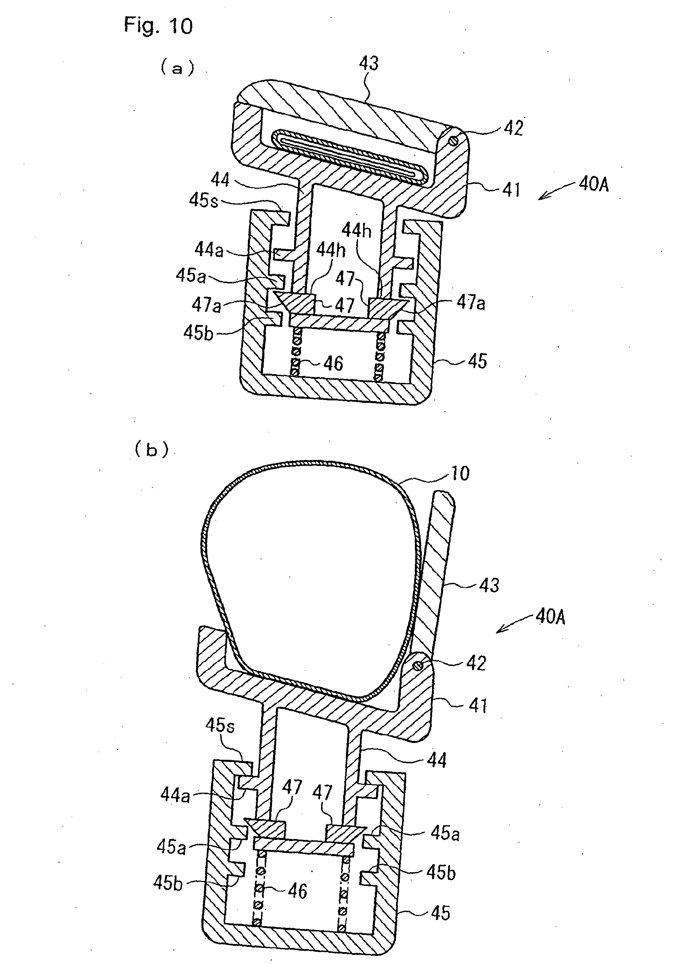

In the embodiment shown in Figs. 7 and 8, the lock pins 47 are provided on the holding member 45. However, they may be provided on the guiding member 44. Fig. 10(a) shows a push-up device 40A according to the embodiment in such a structure, and is a vertical cross-section taken along the same plane as in Fig. 7.

In this embodiment, an upper flange section 45a and a lower flange section 45b are provided on the upper and lower stages on the inner peripheral surface of the holding member 45. The guiding member 44 is formed with supporting holes 44h for the lock pins 47. The lock pins 47 are slidably inserted into the supporting holes 44h, and distal end sides thereof are inserted between the upper flange section 45a and the lower flange section 45b. In this embodiment, a lower surface of the lock pin 47 on a distal end side is formed into the inclined surface 47a inclining upward toward the distal end. An inner peripheral end of the lower flange section 45b is placed downwardly of the inclined surface 47a. The lock pins 47 abut on the upper flange section 45a from below.

The guiding member 44 is provided with the upper flange section 44a, but is not provided with the lower flange section 44b. The upper flange section 44a is provided upwardly of the upper flange section 45a of the holding member 45 by a predetermined distance. Other configurations are the same as those in Fig. 7, and the same parts are represented by the same reference numerals.

In this embodiment as well, when the shoulder belt section 10 starts inflating, a tensile force is generated at the shoulder belt section 10, and the belt guide 41 and the guiding member 44 are pushed downward. In this case, the inclined surfaces 47a of the lock pins 47 come into abutment with the lower flange section 45b, and the lock pins 47 are retracted into the guiding member 44. Accordingly, the lock by the lock pins 47 is released and, as shown in Fig. 9(b), the belt guide 41 and the guiding member 44 rise until the upper flange section 44a abuts on the stopper section 45s by the urging force of the spring 46, so that the shoulder belt section 10 is maintained at a high position.

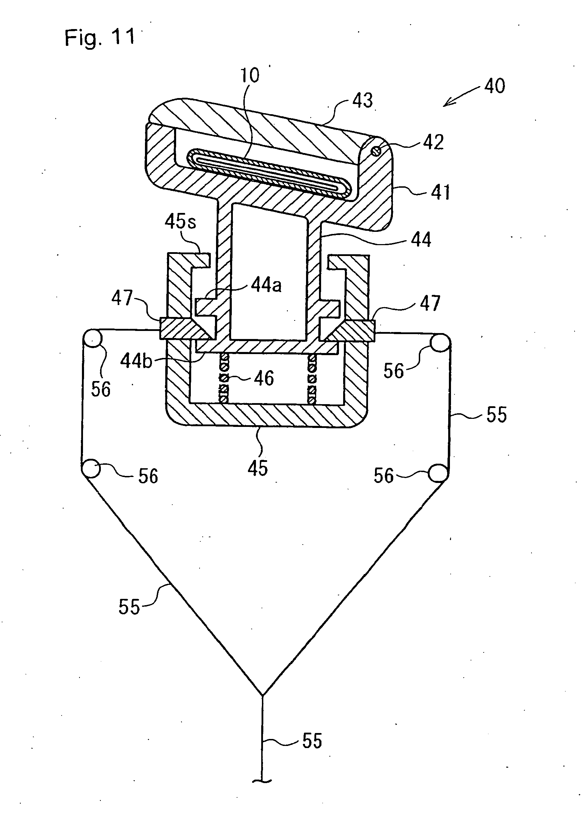

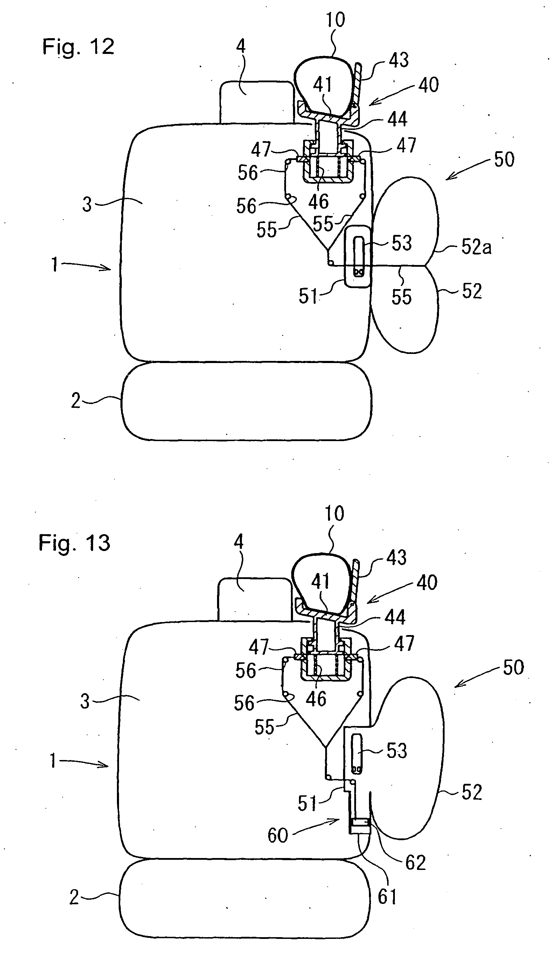

In the embodiment described above, the belt guide 41 and the guiding member 44 are slightly pushed downward by the tensile force of the inflated shoulder belt section 10, whereby the lock pins 47 are retracted. However, as shown in Fig. 11 to Fig. 13, it is also possible to use a side airbag apparatus to release the lock of the push-up device 40 by the lock pins 47. Fig. 11 is a block diagram of a push-up device 40 with a wire and Fig. 12 is a general block diagram of a seat. Fig. 13 is a general block diagram of the seat in a case in which an actuator is mounted to the side airbag apparatus.

In Fig. 11 and Fig. 12, a side airbag apparatus 50 is installed in the seatback 3. The side airbag apparatus 50 includes a case 51 installed on a side surface portion of the seatback 3, a side airbag 52 stored in the case 51, an inflator 53 for inflating the side airbag 52 toward the lateral side of passenger as shown in the drawing, and so on.

In this embodiment, a distal end side 52a of the side airbag 52 in the inflating direction and the lock pins 47 are connected via a wire 55. Reference numeral 56 designates a jig for guiding the wire.

In this passenger constraining apparatus, the shoulder belt section 10 and the side airbag 52 are inflated in case of vehicle side collision. When the inflator 53 is activated and the side airbag 52 is inflated, the wire 55 is pulled by the distal end side 52a of the side airbag 52 in the inflating direction, and the lock pins 47 are retracted. Accordingly, the belt guide 41 and the guiding member 44 rise until the engagement between the lock pin 47 and the lower flange section 44b are released, and the upper flange section 44a comes into abutment with the stopper section 45s, and the shoulder belt section 10 in the inflated state is maintained at a high position.

In Fig. 13, an actuator 60 of a gas cylinder type for pulling the wire 55 by a gas pressure generated from the inflator 53 is provided in the side airbag apparatus 50. The actuator 60 is connected at one end to the case 51, and includes a cylinder 61 to which gas from the inflator 53 is introduced therein and a piston 62 arranged in the cylinder 61. A distal end of the wire 55 is connected to the piston 62.

When the inflator 53 is activated and generates gas in case of vehicle side collision, the piston 62 moves downwardly of Fig. 11, the wire 55 is pulled, and the lock pins 47 are retracted. Accordingly, the guiding member 44 and the belt guide 41 are pushed upward by the spring 46.

The above-described embodiments are all shown for illustrative purposes of the invention, and the invention is not limited to the configurations shown in the drawing.

For example, in the above-describe embodiment, the passenger constraining belt is configured in such a manner that only the shoulder belt section 10 is inflated. However, a configuration in which the lap belt section 11 is also inflated is also applicable. The passenger constraining belt may be configured to be inflated only on the lateral side of the passenger's head. The gas supply system for the inflatable portion, the retracting system for the case in which the belt is not attached, the belt passage structure of the tongue or a through anchor of the passenger constraining belt may be of configurations other than those shown in the drawings.

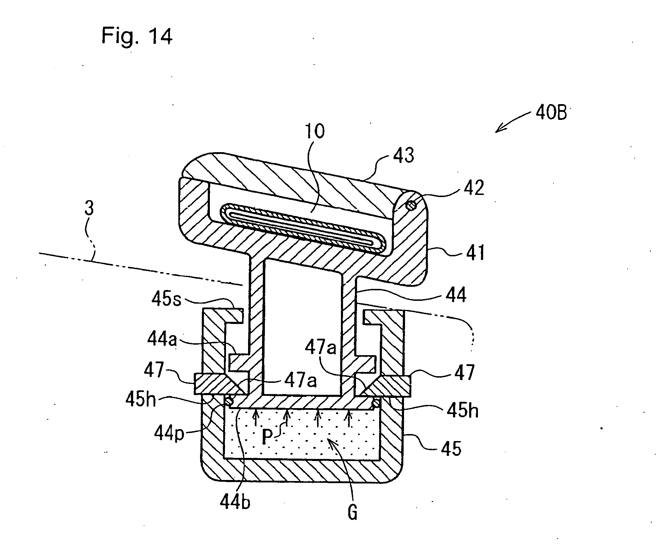

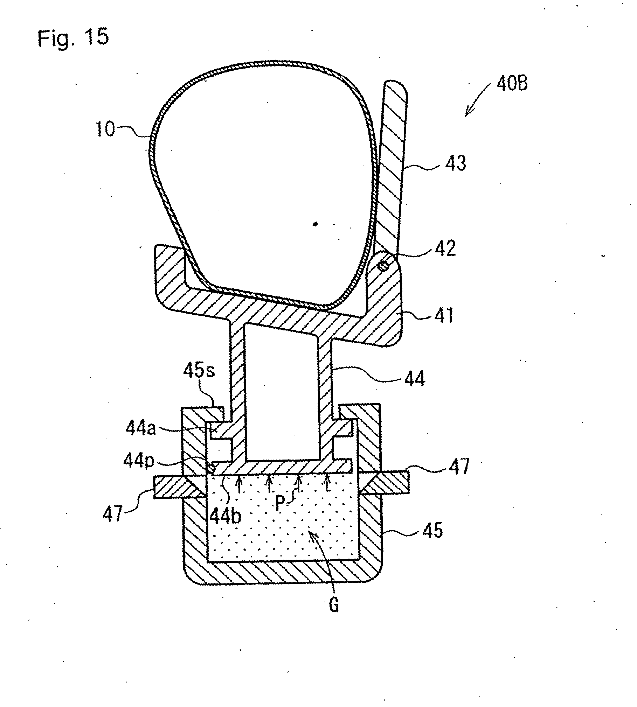

In Fig. 7 to Fig. 13, the guiding member 44 and the belt guide 41 are pushed up by the spring 46. However, it may also be configured to push up with compressed gas (air, for example). Fig. 14 and Fig. 15 are cross-sectional views showing an example of the push-up device configured in this manner. Fig. 14 shows a state before the push-up device pushes the inflatable portion, and Fig. 15 shows a state in the inflatable portion is pushed up.

A push-up device 40B in this embodiment has a configuration in which compressed gas G is filled in an air chamber instead of interposing the spring 46 between the bottom surface (lower flange section 44b) of the guiding member 44 and the bottom surface of the holding member 45 in the push-up device 40 shown in Fig. 7 to Fig. 9 described above. Reference numeral 44p designates a packing interposed between a side peripheral surface of the lower flange section 44b at a lower end of the guiding member 44 and the inner peripheral surface of the holding member 45.

In this embodiment, air is used as compressed gas G. However, gas other than air can be used.

Other configurations of the push-up device 40B are the same as the push-up device 40 shown in Fig. 7 to Fig. 9, and the reference numerals in Fig. 14 and Fig. 15, which are the same as those in Figs. 7 to 9 represent the same parts. An operating state of the push-up device 40B (for example, lock releasing operation of the lock pins 47) is the same as that in the embodiment shown in Fig. 7 to Fig. 9, and description will be omitted.

In this push-up device 40B, when the shoulder belt section 10 is inflated and the lock of the guiding member 44 (lower flange section 44b) by the lock pin 47 is released, the guiding member 44 is raised by a pressure P from the compressed gas G in the holding member 45 and the inflated shoulder belt section 10 is pushed upward as shown in Fig. 14 to Fig. 15.

In this embodiment, the compressed gas G is filled in the holding member 45 in advance. However, alternatively, for example, an inflator (gas generator) is installed in the holding member 45, so that the inflator is activated to eject gas when the lock by the lock pins 47 is released, whereby the guiding member 44 rises by the gas pressure.

## Claims

1. A passenger constraining apparatus comprising:
a passenger constraining belt (10, 10a, 11) to be pulled around a front side of a passenger through a lateral side of the passenger's head and having an inflatable portion (10) at least at a portion arranged on the lateral side of the passenger's head;
a push-up device (20; 20A; 40; 40A; 40B) for pushing up the inflatable portion (10), which is provided on an upper portion of a seatback (3); and raising means for raising a belt guide (21; 41) by an inflating pressure of the inflatable portion (10),
**characterized in that**
the push-up device (20; 20A; 40; 40A; 40B) includes the belt guide (21; 41) provided on an upper surface side of the seatback (3) and the raising means for raising the belt guide (21; 41); and
the push-up device (20; 20A) is arranged on the upper surface side of the seatback (3), and includes the belt guide (21) in which the inflatable portion (10) is passed through on an upper side thereof, a guiding member (22; 22A) extending downward from the belt guide (21) and being supported so as to be capable of rising with respect to the seatback (3), a rotating member (23) arranged on an upper side of the inflatable portion (10) which is drawn over the belt guide (21), extending in a direction intersecting with the longitudinal direction of the inflatable portion (10) and being rotatably attached to the belt guide (21) at other end side thereof in the extending direction so that one end side thereof in the extending direction can rotate upward, a lever section (24) projecting from the other end side of the rotating member (23) in a direction of extension of the extending direction and moving downward when the one end side of the rotating member (23) is rotated upward, and an abutment member (25) provided on the upper portion of the seatback (3) so that the lever section (24) which is rotated downward comes into abutment therewith, and **in that** when the lever section (24) is rotated downward, the lever section (24) comes into abutment with the abutment member and, subsequently, when the lever section (24) is further rotated, the belt guide (21) is pushed upward.

2. The passenger constraining apparatus according to Claim 1, comprising downward movement preventing means (25a; 30) for preventing the downward movement of the pushed-up belt guide (21).

3. The passenger constraining apparatus according to Claim 1 or Claim 2, **characterized in that** the raising means includes urging means (46; G) for urging the belt guide (41) upward, belt guide locking means (47) for preventing the belt guide (41) from rising against an urging force applied by the urging means (46; G), and lock releasing means for releasing the lock of the belt guide locking means (47) to cause the belt guide (41) to start rising.

4. The passenger constraining apparatus according to Claim 3, **characterized in that** the lock releasing means is configured in such a manner that the passenger constraining belt (10, 10a, 11) generates a tensile force by the inflation of the inflatable portion (10), and the tensile force presses and moves the belt guide (41) downward, thereby moving the belt guide locking means (47) to a lock releasing position (44a; 45b).

5. The passenger constraining apparatus according to Claim 3 or Claim 4, comprising an airbag apparatus (50) provided in a vehicle seat (1), and **characterized in that** the lock releasing means causes an airbag (52) to pull the belt guide locking means (47) to move the same to a lock releasing position when the airbag (52) of the airbag apparatus (50) is inflated.

6. The passenger constraining apparatus according to Claim 3 or Claim 4, comprising an airbag apparatus (50) provided in a vehicle seat (1), and **characterized in that** when an inflator (53) in the airbag apparatus (50) is activated to generate gas, the lock releasing means pulls the belt guide locking means (47) by a gas pressure from the inflator (53) to move the same to a lock releasing position.

## Patentansprüche

1. Einen Insassen zurückhaltende Vorrichtung, umfassend:
einen Insassen zurückhaltenden Gurt (10, 10a, 11), welcher von einer Seite des Kopfes des Insassen um eine vordere Seite des Insassen herum zu ziehen ist und
einen aufblasbaren Abschnitt (10) aufweist, welcher zumindest an einem Abschnitt an der Seite des Kopfes des Insassen angeordnet ist;
eine nach oben schiebende Vorrichtung (20; 20A; 40; 40A; 40B), um den aufblasbaren Abschnitt (10) nach oben zu schieben, welcher auf einem oberen Abschnitt einer Rückenlehne (3) vorhanden ist; und Hebemittel, um eine Gurtführung (21; 41) durch einen Aufblasdruck des aufblasbaren Abschnitts (10) anzuheben,
**dadurch gekennzeichnet,**
**dass** die nach oben schiebende Vorrichtung (20; 20A; 40; 40A; 40B) die Gurtführung (21; 41), welche auf einer oberen Oberflächenseite der Rückenlehne (3) vorhanden ist, und die Hebemittel zum Anheben der Gurtführung (21; 41) umfasst; und
**dass** die nach oben schiebende Vorrichtung (20; 20A) auf der oberen Oberflächenseite der Rückenlehne (3) angeordnet ist und umfasst die Gurtführung (21), in welche der aufblasbare Abschnitt (10) durch eine obere Seite davon eingeführt ist, ein Führungsteil (22; 22A), welches sich von der Gutführung (21) nach unten erstreckt und derart gehalten wird, dass es bezüglich der Rückenlehne (3) anhebbar ist, ein Drehteil (23), welches auf einer oberen Seite des aufblasbaren Abschnitts (10), der über die Gutführung (21) gezogen ist, angeordnet ist, welches sich in eine Ausdehnungsrichtung, die sich mit der Längsrichtung des aufblasbaren Abschnitts (10) schneidet, erstreckt und welches an einer in der Ausdehnungsrichtung anderen Endseite davon an der Gurtführung (21) drehbar angebracht ist, so dass in der Ausdehnungsrichtung eine Endseite davon nach oben drehbar ist, einen Hebelabschnitt (24), welcher von der anderen Endseite des Drehteils (23) entgegen der Ausdehnungsrichtung hervorragt und sich nach unten bewegt, wenn die eine Endseite des Drehteils (23) nach oben gedreht wird, und ein Anschlagteil (25), welches auf dem oberen Abschnitt der Rückenlehne (3) vorhanden ist, so dass der Hebelabschnitt (24), welcher nach unten gedreht wird, in einen Anschlag damit kommt, und dass, wenn der Hebelabschnitt (24) nach unten gedreht wird, der Hebelabschnitt (24) in einen Anschlag mit dem Anschlagteil kommt und folglich die Gurtführung (21) nach oben geschoben wird, wenn der Hebelabschnitt (24) weitergedreht wird.

2. Einen Insassen zurückhaltende Vorrichtung nach Anspruch 1, **dadurch gekennzeichnet, dass** die Vorrichtung eine nach unten gerichtete Bewegung verhindernde Mittel (25a; 30) umfasst, um die nach unten gerichtete Bewegung der nach oben schiebenden Gurtführung (21) zu verhindern.

3. Einen Insassen zurückhaltende Vorrichtung nach Anspruch 1 oder Anspruch 2, **dadurch gekennzeichnet, dass** die Hebemittel umfassen Antriebsmittel (46; G), um die Gutführung (41) nach oben zu drängen, Gurtführungsverriegelungsmittel (47), um zu verhindern, dass die Gutführung (41) gegen eine durch die Antriebsmittel (46; G) aufgebrachte Antriebskraft angehoben wird, und eine Verriegelung lösende Mittel, um die Verriegelung der Gurtführungsverriegelungsmittel (47) zu lösen, um zu bewirken, dass die Gutführung (41) angehoben wird.

4. Einen Insassen zurückhaltende Vorrichtung nach Anspruch 3, **dadurch gekennzeichnet, dass** die eine Verriegelung lösenden Mittel in einer Weise ausgestaltet sind, dass der einen Insassen zurückhaltende Gurt (10, 10a, 11) durch das Aufblasen des aufblasbaren Abschnitts (10) eine Zugkraft erzeugt, und dass die Zugkraft die Gurtführung (41) nach unten drückt und bewegt, wodurch sich die Gurtführungsverriegelungsmittel (47) in eine die Verriegelung lösende Stellung (44a; 45b) bewegen.

5. Einen Insassen zurückhaltende Vorrichtung nach Anspruch 3 oder Anspruch 4, **dadurch gekennzeichnet, dass** die Vorrichtung eine Airbag-Vorrichtung (50), welche in einem Fahrzeugsitz (1) vorhanden ist, umfasst, und dass die eine Verriegelung lösenden Mittel bewirken, dass ein Airbag (52) die Gurtführungsverriegelungsmittel (47) zieht, um dieselben in eine die Verriegelung lösende Stellung zu bewegen, wenn der Airbag (52) der Airbag-Vorrichtung (50) aufgeblasen wird.

6. Einen Insassen zurückhaltende Vorrichtung nach Anspruch 3 oder Anspruch 4, **dadurch gekennzeichnet, dass** die Vorrichtung eine Airbag-Vorrichtung (50), welche in einem Fahrzeugsitz (1) vorhanden ist, umfasst und dass, wenn eine Aufblasvorrichtung (53) in der Airbag-Vorrichtung (50) aktiviert wird, um ein Gas zu erzeugen, die die Verriegelung lösenden Mittel die Gurtführungsverriegelungsmittel (47) durch einen Gasdruck von der Aufblasvorrichtung (53) ziehen, um dieselben in eine die Verriegelung lösende Stellung zu bewegen.

## Revendications

1. Dispositif de retenue de passagers comprenant :
une ceinture de retenue de passager (10,10A, 11) destinée à être tirée pour passer autour d'un côté avant d'un passager en passant par un côté latéral de la tête du passager et présentant une partie gonflable (10) au moins dans une zone agencée du côté latéral de la tête du passager ;
un dispositif de remontée (20 ; 20A ; 40 ; 40A ; 40B) pour faire remonter la partie gonflable (10), prévu sur une partie supérieure d'un dossier de siège (3) ; et des moyens d'élévation pour élever un guide de ceinture (21 ; 41) au moyen d'une pression de gonflage de la partie gonflable (10),
**caractérisé en ce que**
le dispositif de remontée (20 ; 20A ; 40 ; 40A ; 40B) comprend le guide de ceinture (21 ; 41) prévu au niveau d'un côté de surface supérieure du dossier de siège (3) ainsi que les moyens d'élévation pour élever le guide de ceinture (21 ; 41) ; et
le dispositif de remontée (20 ; 20A) est agencé sur le côté de surface supérieure du dossier de siège (3), et comprend le guide de ceinture (21) par lequel passe la partie gonflable (10) au niveau de son côté supérieur, un organe de guidage (22 ; 22A) s'étendant vers le bas à partir du guide de ceinture (21) et étant supporté d'une façon lui permettant de se remonter par rapport au dossier de siège (3), un organe rotatif (23) agencé au niveau d'un côté supérieur de la partie gonflable (10) qui est tiré par dessus le guide de ceinture (21), s'étendant selon une direction qui coupe la direction longitudinale de la partie gonflable (10) et étant fixée de façon rotative au guide de ceinture (21) de l'autre côté de celui-ci selon la direction d'extension, de sorte qu'un côté d'extrémité de celui-ci selon la direction d'extension peut tourner vers le haut, une partie formant levier (24) faisant saillie de l'autre côté d'extrémité de l'organe rotatif (23) selon une direction d'extension de la direction d'extension, et se déplaçant vers le bas lorsque ledit côté d'extrémité de l'organe rotatif (23) tourne vers le haut, et un organe de butée (25) prévu sur la partie supérieure du dossier de siège (3) de sorte que la partie formant levier (24) vient, en tournant vers le bas, en butée avec celui-ci, et **en ce que** lorsqu'on fait tourner la partie formant levier (24) vers le bas, la partie formant levier (24) vient en butée avec l'organe de butée et, par la suite, en poursuivant la rotation de la partie formant levier (24), le guide de ceinture (21) est poussé vers le haut.

2. Le dispositif de retenue de passager selon la revendication 1, comprenant des moyens empêchant un déplacement vers le bas (25a; 30) pour empêcher le déplacement vers le bas du guide de ceinture (21) remonté.

3. Le dispositif de retenue de passager selon la revendication 1 ou la revendication 2, **caractérisé en ce que** les moyens d'élévation comprennent des moyens de sollicitation (46 ; G) pour solliciter le guide de ceinture (41) vers le haut, des moyens de verrouillage de guide de ceinture (47) pour empêcher la remontée du guide de ceinture (41) à l'encontre d'une force de sollicitation appliquée par les moyens de sollicitation (46 ; G), et des moyens de déverrouillage pour libérer le verrouillage des moyens de verrouillage de guide de ceinture (47) pour permettre au guide de ceinture (41) de commencer à se remonter.

4. Le dispositif de retenue de passager selon la revendication 3, **caractérisé en ce que** les moyens de déverrouillage sont configurés d'une telle façon que la ceinture de retenue de passager (10,10A, 11) engendre une force de traction grâce au gonflement de la partie gonflable (10), et la force de traction pousse le guide de ceinture (41) en le déplaçant vers le bas, en déplaçant ainsi les moyens de verrouillage de guide de ceinture (47) à une position de déverrouillage (44A ; 45B).

5. Le dispositif de retenue de passager selon la revendication 3 ou la revendications 4, comprenant un appareil formant coussin gonflable de sécurité (50) prévu dans un siège de véhicule (1), et **caractérisé en ce que** les moyens de déverrouillage ont pour effet de faire tirer, par un coussin gonflable (52) les moyens de verrouillage de guide de ceinture (47) afin de déplacer ce dernier a une position de déverrouillage lorsque le coussin gonflable (52) de l'appareil formant coussin gonflable de sécurité (50) est gonflé.

6. L'appareil de retenue de passager selon la revendication 3 ou la revendications 4, comprenant un appareil formant coussin gonflable de sécurité (50) prévu dans un siège de véhicule (1), et **caractérisé en ce que** lorsqu'un gonfleur (53) faisant partie de l'appareil formant coussin gonflable de sécurité (50) est activé pour engendrer du gaz, les moyens de déverrouillage tirent, grâce à la pression du gaz venant du gonfleur (53), les moyens de verrouillage de guide de ceinture (47) afin de les déplacer jusqu'à une position de déverrouillage.
